# EUROPEAN PATENT APPLICATION

(11) **EP 4 757 020 A1**
(43) Date of publication of application: **10.06.2026**
(21) Application number: 25220307.0
(22) Date of filing: 03.12.2025
(51) Int. Cl.: H01M 50/184, H01M 50/188, H01M 50/193, H01M 50/197, H01M 50/198, H01M 50/342, H01M 50/375

(54) **SECONDARY BATTERY AND METHOD FOR MANUFACTURING THE SAME**

(30) Priority: 05.12.2024 KR 20240179181
(71) Applicant: SAMSUNG SDI CO., LTD., Yongin-si, Gyeonggi-do 17084 (KR)
(72) Inventor: Zhang, Zhengde, 17084 Yongin-si, Gyeonggi-do (KR)
(74) Representative: Meissner Bolte Partnerschaft mbB

(57) **Abstract**

A secondary battery (10) is disclosed that includes an electrode assembly (100) including a first electrode (110), a separator (130), and a second electrode (120), a case (200) having an open first side that accommodates the electrode assembly (100), and having a terminal hole (210) on a second side different from the first side, a cover (300) coupled to the open first side of the case (200), an electrode terminal (500), coupled inside the case (200) to one of the first electrode (110) or the second electrode (120) via a terminal plate (400), and exposed to an exterior of the case (200), a gasket (600) arranged between the case (200) and the electrode terminal (500) on an exterior of the case (200) and inside the terminal hole (210), and an insulator (700) between the case (200) and the terminal plate (400) on an interior of the case (200), wherein at least a portion of one or more of the gasket (600) and the insulator (700) are configured to melt in a set temperature range.

## Description

### BACKGROUND

### FIELD

The present invention relates to a secondary battery and a method for manufacturing the same.

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

An aluminum alloy case may be used for secondary batteries used in small electronic devices as they may be light weight, formable, and economical. However, the drawback of using an aluminum alloy case is that they may be more easily damaged for one or more reasons in one or more processes. In some embodiments, research is underway on a stainless steel (Stainless Use Steel, SUS) can-type secondary battery in which stainless steel is used instead of aluminum.

A thermal exposure safety heating test for the secondary battery is generally conducted at 130°C-150°C for 10-60 minutes. Due to the robustness of the SUS can-type secondary battery, gas may not be easily released during the thermal exposure safety heating test. In addition, because the case may expand and the cover may rupture due to gas generated inside the secondary battery, the it may be difficult to complete the test successfully.

The above information disclosed in this Background section is for enhancement of understanding of the background of the present invention, and therefore, it may contain information that does not constitute related (or prior) art.

### SUMMARY

One or more embodiments of the present invention provide a secondary battery and a method for manufacturing the same.

However, the technical problem to be solved by the present invention is not limited to the above problem, and other problems not mentioned herein, and aspects and features of the present invention that would address such problems, will be clearly understood by those skilled in the art from the description of the present invention below.

Aspects of embodiments provide a secondary battery including an electrode assembly comprising a first electrode, a separator, and a second electrode, a case having an open first side that accommodates the electrode assembly, and having a terminal hole on a second side different from the first side, a cover coupled to the open first side of the case, an electrode terminal, coupled inside the case to one of the first electrode or the second electrode via a terminal plate, and exposed to an exterior of the case, a gasket arranged between the case and the electrode terminal on an exterior of the case and inside the terminal hole, and an insulator between the case and the terminal plate on an interior of the case, wherein at least a portion of one or more of the gasket and the insulator are configured to melt in a set temperature range.

According to an embodiment, the gasket may include a first gasket member in contact with the electrode terminal, and a second gasket member laminated on one surface of the first gasket member and fitted into the terminal hole. The insulator may include a first insulator member in contact with the terminal plate, and a second insulator member laminated on one surface of the first insulator member, in contact with an inner surface of the case, and connected to the second gasket member.

According to an embodiment, one or more of the first gasket member and the first insulator member may have a higher melting point than one or more of the second gasket member and the second insulator member.

According to an embodiment, a melting point of one or more of the first gasket member and the first insulator member may be in a range from approximately 250°C to approximately 350°C, and a melting point of one or more of the second gasket member and the second insulator member may be in a range from approximately 115°C to approximately 145°C.

According to an embodiment, one or more of the second gasket member and the second insulator member may be configured to melt in the set temperature range to form a flow path connecting an interior of the case to an exterior of the case.

According to an embodiment, one or more of the first gasket member and the first insulator member may include polyethylene terephthalate (PET) or perfluoroalkoxy alkanes (PFA).

According to an embodiment, one or more of the second gasket member and the second insulator member may include chlorinated polypropylene (CPP).

According to an embodiment, a thickness of the first gasket member may be in a range from approximately 50% to approximately 75% of a thickness of the gasket, and a thickness of the first insulator member may be in a range from approximately 50% to approximately 75% of a thickness of the insulator.

According to an embodiment, the gasket may include a first gasket member fitted into the terminal hole, and a second gasket member, laminated on one surface of the first gasket member and in contact with the electrode terminal. The insulator may include a first insulator member in contact with the terminal plate, and a second insulator member, laminated on one surface of the first insulator member and connected to the second gasket member while being in contact with an inner surface of the case.

According to an embodiment, the gasket may include a first gasket member formed to be spaced apart from the electrode terminal by corresponding to a shape of the electrode terminal, and a second gasket member surrounding the first gasket member and in contact with both the electrode terminal and the terminal hole. The insulator may include a first insulator member in contact with the terminal plate, and a second insulator member laminated on one surface of the first insulator member, in contact with an inner surface of the case, and connected to the second gasket member.

According to an embodiment, at least one of the case or the cover may include stainless use steel (SUS).

According to an embodiment, at least one of the gasket or the insulator each may include an insulating material and a thermoplastic resin.

Aspects of embodiments provide a secondary battery including an electrode assembly including an electrode assembly including a first electrode, a separator, and a second electrode, a case having an open first side that accommodates the electrode assembly, and having a terminal hole on a second side different from the first side, a cover coupled to the open first side of the case, an electrode terminalin an interior of the case and electrically connected to one of the first electrode or the second electrode, and exposed to an exterior of the case, and a gasket between the case and the electrode terminal and inside the terminal hole, wherein at least a portion of the gasket may be configured to melt in a set temperature range.

According to an embodiment, the gasket may include a first gasket member in contact with the electrode terminal, and a second gasket member laminated on one surface of the first gasket member and fitted into the terminal hole.

According to an embodiment, the first gasket member may have a higher melting point than the second gasket member.

According to an embodiment, a melting point of the first gasket member may be in a range from approximately 250°C to approximately 350°C, and a melting point of the second gasket member may be in a range from approximately from 115°Cto approximately 145°C.

Aspects of embodiments provide a method for manufacturing a secondary battery including inserting an electrode assembly, comprising a first electrode, a separator, and a second electrode, into a case having an open first side and a terminal hole formed on a second side different from the first side, arranging, inside the case, a terminal plate that is connected to one of the first electrode or the second electrode, and arranging an insulator between the case and the terminal plate, inserting, from an exterior of the case, an electrode terminal having a gasket coupled thereto into the terminal hole, and coupling a cover to the open first side of the case, wherein at least a portion of one or more of the gasket and the insulator may melt in a set temperature range.

According to an embodiment, the gasket may include a first gasket member in contact with the electrode terminal, and a second gasket member laminated on one surface of the first gasket member and fitted into the terminal hole. The insulator may include a first insulator member in contact with the terminal plate, and a second insulator member laminated on one surface of the first insulator member, in contact with an inner surface of the case, and connected to the second gasket member.

According to an embodiment, a melting point of one or more of the first gasket member and the first insulator member may be in a range from approximately 250°C to approximately 350°C, and a melting point of one or more of the second gasket member and the second insulator member may be in a range from approximately 115°C to approximately 145°C.

According to an embodiment, one or more of the second gasket member and the second insulator member may melt in a set temperature range to form a flow path from an interior of the case to an exterior of the case.

According to some embodiments of the present invention, when a thermal exposure safety heating test for the secondary battery is performed, a portion of the gasket and the insulator arranged between the electrode terminal and the case may melt, and gas generated inside the case may be discharged to the outside of the case. In some embodiments, expansion of the case or rupture of the cover due to gas generation during the thermal exposure safety heating test may be reduced, enabling a more stable performance of the test.

According to some embodiments of the present invention, by using a gasket and an insulator formed by combining a low-melting-point material and a high-melting-point material between the case and the electrode terminal, the sealing state of the secondary battery may be maintained at a temperature lower than the melting points of those materials, whereas at greater than or equal to those melting points, an effective flow path may be formed for releasing gas generated inside the secondary battery to the outside. Therefore, the safety of the secondary battery may be improved.

According to some embodiments of the present invention, even if the low-melting-point material melts at a temperature greater than or equal to its melting point, the high-melting-point material can remain so as to reduce an electrical short between the case and the electrode terminal or between the case and the terminal plate.

However, aspects and features of the present invention are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present invention and further describe aspects and features of the present invention together with the detailed description of the present invention. Thus, the present invention should not be construed as being limited to the drawings.
FIG. 1 illustrates an exploded perspective view of an example secondary battery according to an embodiment of the present invention.
FIG. 2 illustrates a perspective view of an example secondary battery according to an embodiment of the present invention.
FIG. 3 is a cross-sectional view of an example gasket and an insulator according to an embodiment of the present invention.
FIG. 4 is a cross-sectional view of the gasket and the insulator shown in FIG. 3 as a portion of the gasket and the insulator are melted as gas is released to the outside of the case according to an embodiment of the present invention.
FIG. 5 is a cross-sectional view illustrating remaining unmelted portions of the gasket and the insulator shown in FIG. 4.
FIG. 6 is a cross-sectional view illustrating an example gasket and an insulator according to one embodiment of the present invention.
FIG. 7 is a cross-sectional view of the gasket and the insulator shown in FIG. 6 as a portion of the gasket and the insulator are melted as gas is released to the outside of the case according to an embodiment of the present invention.
FIG. 8 is a cross-sectional view illustrating remaining unmelted portions of the gasket and the insulator shown in FIG. 7.
FIG. 9 is a cross-sectional view illustrating an example gasket and an insulator according to one embodiment of the present invention.
FIG. 10 is a cross-sectional view of the gasket and the insulator shown in FIG. 9 as a portion of the gasket and the insulator are melted as gas is released to the outside of the case according to an embodiment of the present invention.
FIG. 11 is a cross-sectional view illustrating remaining unmelted portions of the gasket and the insulator shown in FIG. 10.
FIG. 12 is a cross-sectional view of an example gasket of a secondary battery according to one embodiment of the present invention.
FIG. 13 is a flowchart illustrating an example method for manufacturing a secondary battery according to an embodiment of the present invention.

### DETAILED DESCRIPTION

Hereinafter, embodiments of the present invention will be described, in detail, with reference to the accompanying drawings. The terms or words used in the present specification and claims are not to be limitedly interpreted as general or dictionary meanings and should be interpreted as meanings and concepts that are consistent with the technical idea of the present invention on the basis of the principle that an inventor can be his/her own lexicographer to appropriately define concepts of terms to describe his/her invention in the best way.

The embodiments described in this specification and the configurations shown in the drawings are only some of the embodiments of the present invention and do not represent all of the technical spirit, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C," "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting for the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any subrange subsumed within the ranges expressly recited herein.

References to two compared elements, features, etc. as being "the same" may mean that they are "substantially the same." Thus, the phrase "substantially the same" may include a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked," or "connected" to each other, or another component may be "interposed" between the components."

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

In this specification, the singular expression may include the plural expression unless it is clearly specified in the context that it refers only to the singular expression. In this specification, unless otherwise specified in the context, the plural expression may include the singular expression. Throughout the specification, when any part is described as including a certain component, it means that the part may further include other components, unless there is specifically opposing description.

In the present invention, layers and regions shown in the drawings may have sizes or relative sizes exaggerated for clarity of explanation. That is, the sizes shown in the drawings are merely to aid understanding and are not limited thereto. Also, the same reference numerals refer to the same components throughout the specification.

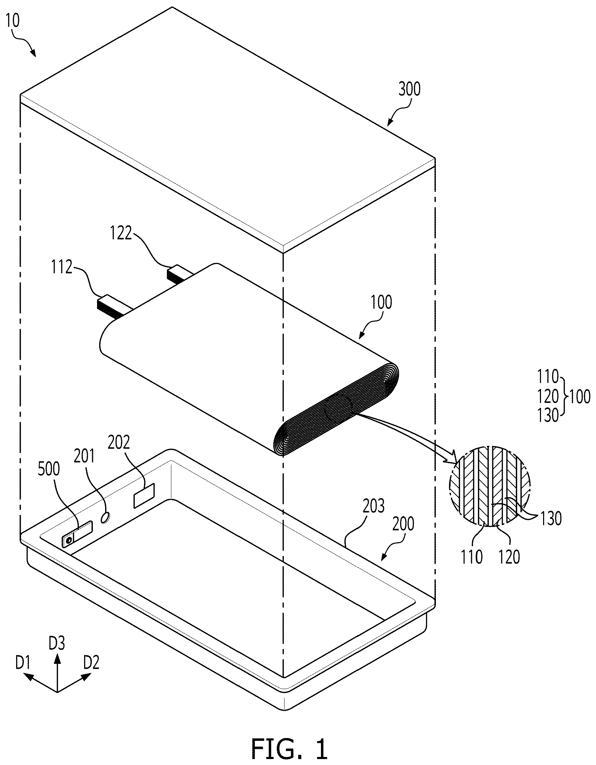

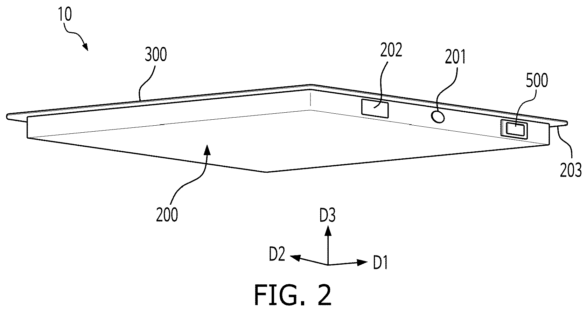

FIG. 1 illustrates an exploded perspective view of an example secondary battery according to an embodiment of the present invention. FIG. 2 illustrates a perspective view of an example secondary battery according to an embodiment of the present invention.

Referring to FIGS. 1 and 2, a secondary battery 10 may include an electrode assembly 100 comprising a first electrode 110, a separator 130, and a second electrode 120; a case 200, whose one surface (e.g., one surface in the D3 direction of case 200) is open to accommodate electrode assembly 100; and a cover 300 coupled to the open first side of case 200.

For example, the electrode assembly 100 may be wound or stacked such that the separator 130, such as, for example, an insulator 700, is interposed between first electrode 110 and second electrode 120. The first electrode 110 may include a first substrate and a first active material layer located on the first substrate. A first electrode tab 112 of the first electrode 110 may extend outward from a first non-coating portion of the first substrate where the first active material layer is not located. The second electrode 120 may include a second substrate and a second active material layer located on the second substrate. A second electrode tab 122 of second electrode 120 may extend outward from a second non-coating portion of the second substrate where the second active material layer is not located.

The first electrode 110 may function as a positive electrode. In this case, the first substrate may be a positive electrode substrate. The positive electrode substrate may be composed of aluminum foil, and the positive electrode active material may, for example, include a transition metal oxide.

The positive electrode active material may include a compound (a lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiaA1-bXbO2-cDc (0.90≤a≤1.8, 0≤b≤0.5, and 0≤c≤0.05); LiaMn2-bXbO4-cDc (0.90≤a≤1.8, 0≤b≤0.5, and 0≤c≤0.05); LiaNi1-b-cCobXcO2-αDα (0.90≤a≤1.8, 0≤b≤0.5, 0≤c≤0.5, and 0<α<2); LiaNi1-b-cMnbXcO2-αDα (0.90≤a≤1.8, 0≤b≤0.5, 0≤c≤0.5, and 0<α<2); LiaNibCocL1dGeO2 (0.90≤a≤1.8, 0≤b≤0.9, 0≤c≤0.5, 0≤d≤0.5, and 0≤e≤0.1); LiaNiGbO2 (0.90≤a≤1.8 and 0.001≤b≤0.1); LiaCoGbO2 (0.90≤a≤1.8 and 0.001≤b≤0.1); LiaMn1-bGbO2 (0.90≤a≤1.8 and 0.001≤b≤0.1); LiaMn2GbO4 (0.90≤a≤1.8 and 0.001≤b≤0.1); LiaMn1-gGgPO4 (0.90≤a≤1.8 and 0≤g≤0.5); Li(3-f)Fe2(PO4)3 (0≤f≤2); or LiaFePO4 (0.90≤a≤1.8).

In the above Chemical Formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

The positive electrode active material may be, for example, a high-nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol%, based on 100 mol% of metal excluding lithium in the lithium transition metal composite oxide. The high-nickel-based positive electrode active material may realize high capacity and may be applied to a high-capacity, high-density rechargeable lithium battery.

The second electrode 120 may function as a negative electrode. In this case, the second substrate may be a negative electrode substrate. The negative electrode substrate may, for example, be composed of copper foil or nickel foil, and the negative electrode active material may, for example, include graphite.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as crystalline carbon, amorphous carbon, or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, or the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), or a Si-Q alloy (where Q is selected from an alkali metal, an alkaline-earth metal, a Group 13 element, a Group 14 element (excluding Si), a Group 15 element, a Group 16 element, a transition metal, a rare earth element, or a combination thereof). The Sn-based negative electrode active material may include Sn, SnO2, a Sn-based alloy, or a combination thereof.

The silicon-carbon composite may be a composite of silicon and amorphous carbon. According to an embodiment, the silicon-carbon composite may be in the form of silicon particles and amorphous carbon coated on the surfaces of the silicon particles. For example, the silicon-carbon composite may include a secondary particle (core) in which primary silicon particles are assembled and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core containing crystalline carbon and silicon particles, and an amorphous carbon coating layer on a surface of the core.

The Si-based negative electrode active material or the Sn-based negative electrode active material may be used in combination with a carbon-based negative electrode active material.

Separator 130 may include polyethylene, polypropylene, polyvinylidene fluoride, or a multilayer film of two or more layers thereof, and it may be a mixed multilayer film such as a polyethylene/polypropylene two-layer separator, a polyethylene/polypropylene/polyethylene three-layer separator, or a polypropylene/polyethylene/polypropylene three-layer separator.

The separator 130 may include a porous substrate and a coating layer including an organic material, an inorganic material, or a combination thereof on one or both surfaces of the porous substrate.

The porous substrate may be a polymer film formed of any one polymer selected from a polyolefin such as polyethylene and polypropylene; a polyester such as polyethylene terephthalate and polybutylene terephthalate; polyacetal; polyamide; polyimide; polycarbonate; polyether ketone; polyarylether ketone; polyether ketone; polyetherimide; polyamideimide; polybenzimidazole; polyethersulfone; polyphenylene oxide; a cyclic olefin copolymer; polyphenylene sulfide; polyethylene naphthalate; a glass fiber; TEFLON; polytetrafluoroethylene; or a copolymer or mixture of two or more thereof.

The organic material may include a polyvinylidene fluoride-based polymer or a (meth)acrylic polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, and combinations thereof, but is not limited thereto.

The organic material and the inorganic material may be mixed in one coating layer, or a coating layer including an organic material and a coating layer including an inorganic material may be stacked.

In one embodiment, the case 200 may have an open first side to accommodate the electrode assembly 100, and a second side (for example, one surface in the D1 direction of the case 200), different from the first side, on which a negative terminal and a positive terminal are disposed or arranged.

In one embodiment, the case 200 may include an electrolyte injection port 201. For example, the electrolyte injection port 201 may be formed as a through-hole on the second side of case 200. After the case 200 and cover 300 are joined and sealed, the electrolyte injection port 201 may be used to introduce an electrolyte into the case 200 of secondary battery 10. After the electrolyte is introduced, the electrolyte injection port 201 may be sealed by a sealing member. Although in the present invention the electrolyte injection port 201 is depicted as being located between a pair of electrode terminals 500, the location is not limited to the illustrated position and may vary in different embodiments.

In one embodiment, a pair of electrode terminals 500 may be disposed or arranged on the second side of case 200. For example, with reference to the electrolyte injection port 201, a positive terminal and a negative terminal may be disposed or arranged on opposite sides in the D2 direction. In the embodiment of FIG. 1, electrode terminal 500 may be a positive terminal, and a negative terminal 202 may be spaced apart from the electrode terminal 500 with the electrolyte injection port 201 interposed therebetween.

The electrode terminal 500 may be electrically connected to the first electrode tab 112 of the electrode assembly 100, and the negative terminal 202 can be electrically connected to the second electrode tab 122 of the electrode assembly 100. The positions of the electrode terminal 500 and the negative terminal 202 according to the present invention are not limited to what is shown in FIG. 1 and may vary in different embodiments.

In one embodiment, a receiving space for receiving the electrode assembly 100 may be formed in a substantially central region of the case 200 via press processing or the like. In some embodiments, a flange 203 may be formed in four directions on the upper edge of the receiving space.

Cover 300 may be coupled to the open first side of case 200. In one embodiment, case 200 and cover 300 may be joined to form the external appearance of secondary battery 10. For example, cover 300 may be formed as a flat plate disposed or arranged on top of case 200 so as to seal the receiving space of case 200. The cover 300 may be formed as a flat plate of a size capable of covering the flange 203 so that the cover 300 is in surface contact with the flange 203.

For example, the case 200 and the cover 300 may be joined by metal joining (e.g., welding, brazing, soldering, etc.). In this case, the flange 203 of case 200 and the edge of cover 300 may be joined. In some embodiments, after joining the case 200 and cover 300, at least a portion of the flange 203 may be cut using a laser to improve the energy density of the secondary battery 10.

In one embodiment, at least one of the case 200 and cover 300 may include stainless use steel (SUS). For example, as illustrated in FIG. 1, the case 200 and cover 300 may include (e.g., each include) stainless steel, such that secondary battery 10 may be an SUS can-type secondary battery. However, the present invention is not limited thereto. For example, the case 200 and cover 300 may be formed of a conductive metal such as aluminum, an aluminum alloy, or steel plated with nickel, to form the overall appearance of secondary battery 10.

The secondary battery 10 may be, for example, a lithium battery cell or a sodium battery cell. However, the scope of the present invention is not limited thereto, and secondary battery 10 may include any type of battery capable of repeatedly providing electricity through charging and discharging.

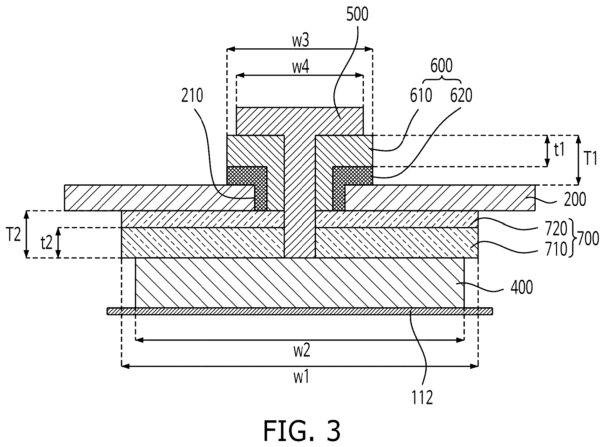

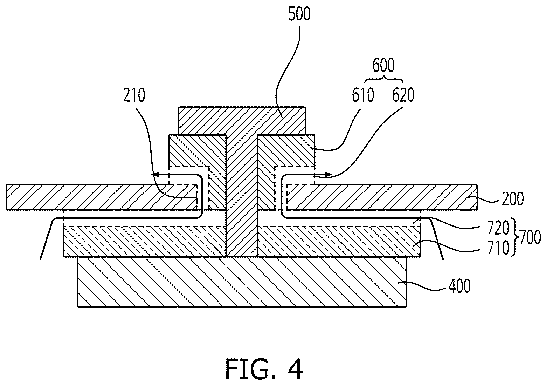

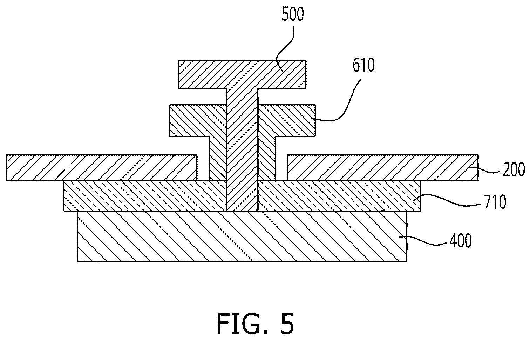

FIG. 3 is a cross-sectional view of an example gasket 600 and an insulator 700 according to an embodiment of the present invention. FIG. 4 is a cross-sectional view of the gasket 600 and the insulator 700 shown in FIG. 3 as a portion of the gasket 600 and the insulator 700 are melted as gas is released to the outside of the case 200 according to an embodiment of the present invention. FIG. 5 is a cross-sectional view illustrating remaining unmelted portions of the gasket 600 and the insulator 700 shown in FIG. 4.

In one embodiment, the case 200 may have an open first side to accommodate the electrode assembly 100, and a terminal hole 210 may be formed on a second side different from the first side. The electrode terminal 500 may be inserted into the terminal hole 210 of the case 200 and electrically connected to the first electrode tab 112 of the electrode assembly 100 a terminal plate 400. At this time, electrode terminal 500 may be electrically insulated from the case 200 by a gasket 600 described below.

For example, the electrode terminal 500 may include an upper head and a body inserted into the terminal hole 210. The top surface of the head of the electrode terminal 500 may be formed in a shape selected from circular or rectangular, although the present invention does not limit the shape of electrode terminal 500. In one embodiment, electrode terminal 500 may be assembled into the terminal hole 210 by a spinning process.

In one embodiment, the electrode terminal 500 may be coupled to the terminal plate 400 that is connected, inside case 200, to either the first electrode 110 or second electrode 120. For example, electrode terminal 500 may be coupled to the terminal plate 400, which is connected to the first electrode 110 (the positive electrode). One end of the body of the electrode terminal 500 may be inserted into the terminal hole 210 and coupled to terminal plate 400, and the head portion of the body may be exposed to the outside of the case 200.

The terminal plate 400 may be connected to either the first electrode 110 or the second electrode 120 inside case 200. For example, the terminal plate 400 may be coupled to the first electrode tab 112 connected to the positive electrode of the electrode assembly 100, and may be disposed or arranged inside the case 200. The terminal plate 400 may be formed in a flat plate shape. In one embodiment, the electrode terminal 500 may include the same material as the terminal plate 400.

The electrode terminal 500 may be coupled with the terminal plate 400, which is connected to the first electrode 110 of electrode assembly 100, and may be electrically connected to an external terminal. For example, if the terminal plate 400 includes aluminum, the electrode terminal 500 may also include aluminum. This may allow electrode terminal 500 to be electrically connected to the terminal plate 400.

The gasket 600 may be disposed or arranged between the electrode terminal 500 and case 200. In some embodiments, the electrode terminal 500 may be coupled so as to penetrate the gasket 600. In one embodiment, the gasket 600 may be disposed or arranged on the outside of case 200 between the case 200 and the electrode terminal 500. The gasket 600 may be inserted into the terminal hole 210 to place the gasket 600 inside the terminal hole 210. For example, a head portion forming the upper surface of the gasket 600 may be configured to seat the upper surface of the electrode terminal 500. A body portion forming the lower surface of the gasket 600 may be formed to surround the electrode terminal 500, and may be inserted into the terminal hole 210 together with the electrode terminal 500. The gasket 600 may be formed so as to surround the electrode terminal 500 and to electrically insulate the electrode terminal 500 from the case 200. The gasket 600 may include an insulating material to insulate the electrode terminal 500 from the case 200.

An insulator 700 may be disposed or arranged between the case 200 and terminal plate 400 on the inside of case 200. In one embodiment, the insulator 700, formed of an insulating material similar to that of the gasket 600, may be coupled to the inner lower surface of case 200. The insulator 700 may insulate the terminal plate 400 from the case 200. The terminal plate 400 may be in contact with the lower surface of the insulator 700 and may be electrically insulated from the case 200 by the insulator 700 while being electrically connected to the electrode terminal 500.

In one embodiment, the width (w1) of the insulator 700 may be greater than the width (w2) of the terminal plate 400. This allows stable insulation between the terminal plate 400 and case 200. In some embodiments, the width (w3) of the gasket 600 may be greater than the width (w4) of the electrode terminal 500. This allows stable insulation between the electrode terminal 500 and the case 200.

At least a portion of one or more (e.g., each) of the gasket 600 and the insulator 700 may melt in a predetermined or set temperature range. In some embodiments, the gasket 600 may include a first gasket member 610 and a second gasket member 620. In some embodiments, the insulator 700 may include a first insulator member 710 and a second insulator member 720. In some embodiments, the second gasket member 620 and the second insulator member 720 may melt in a predetermined or set temperature range.

For example, during a thermal exposure safety heating test of the secondary battery 10 at 130°C-150°C for 10-60 minutes, at least a portion of one or more (e.g., each) of gasket 600 and insulator 700 may melt at or in the predetermined or set temperature range. In some embodiments, the predetermined or set temperature range may be from approximately 130°C to approximately 150°C. For example, the portion of one or more of the gasket 600 or the insulator 700 may melt when exposed to a temperature in the range of approximately 130°C to approximately 150°C.

In one embodiment, as shown in FIG. 3, the first gasket member 610 may be in contact with the electrode terminal 500. The second gasket member 620 may be laminated on one surface of the first gasket member 610 and may be fitted (e.g., press-fitted) into the terminal hole 210. In some embodiments, the first insulator member 710 may be in contact with the terminal plate 400. The second insulator member 720 may be laminated on one surface of the first insulator member 710 and may be in contact with an inner surface of the case 200. In this configuration, the second insulator member 720 may be connected to the second gasket member 620.

Each (e.g., one or more) of the first gasket member 610 and the first insulator member 710 may have a higher melting point than one or more (e.g., each) of the second gasket member 620 and the second insulator member 720. In one embodiment, the melting points of one or more (e.g., each) of the first gasket member 610 and first insulator member 710 may be in a range from approximately 250°C to approximately 350°C, and the melting points of one or more (e.g., each) of second gasket member 620 and second insulator member 720 may be in a range from approximately 115°C to approximately145°C. In some embodiments, one or more (e.g., each) of second gasket member 620 and second insulator member 720 may melt in a predetermined or set temperature range, forming a flow path that connects the interior of case 200 to the exterior of case 200.

For example, during the thermal exposure safety heating test of the secondary battery 10 at 130°C-150°C, the second gasket member 620 and second insulator member 720 may melt, while first gasket member 610 and first insulator member 710 remain without melting. Therefore, as second gasket member 620 and second insulator member 720 melt, a space (dotted line in FIG. 4) in which those members were previously disposed or arranged may become a flow path through which the gas generated inside case 200 may be discharged. For example, the gas inside the case 200 generated during the thermal exposure safety heating test may travel along the inner surface of case 200 and exit to the outside of case 200 through terminal hole 210.

As shown in FIG. 5, in the state where second gasket member 620 and second insulator member 720 are melted, the first gasket member 610 and the first insulator member 710 remain without melting. Therefore, the first gasket member 610 may insulate between case 200 and electrode terminal 500, and the first insulator member 710 may insulate between case 200 and terminal plate 400.

In one embodiment, the thickness (t1) of first gasket member 610 may be formed in a range from approximately 50% to approximately 75% of the thickness (T1) of gasket 600. In some embodiments, if the thickness (t1) of first gasket member 610 is less than 50% of the thickness (T1) of the gasket 600, the insulating function between the case 200 and the electrode terminal 500 may deteriorate. In some embodiments, if the thickness (t1) of the first gasket member 610 exceeds 75% of the thickness (T1) of the gasket 600, the function of the gas discharge path formed by the melting of second gasket member 620 may deteriorate.

In some embodiments, the thickness (t2) of the first insulator member 710 may be formed in a range from approximately 50% to approximately 75% of the thickness (T2) of the insulator 700. In some embodiments, itf the thickness (t2) of the first insulator member 710 is less than 50% of the thickness (T2) of the insulator 700, the insulating function between the case 200 and the terminal plate 400 may deteriorate. In some embodiments, if the thickness (t2) of the first insulator member 710 exceeds 75% of the thickness (T2) of the insulator 700, the function of the gas discharge path formed by the melting of the second insulator member 720 may deteriorate.

For example, the gasket 600 and the insulator 700 may include an insulating material and a thermoplastic resin. According to an embodiment, one or more (e.g., each) of the first gasket member 610 and the first insulator member 710 may include polyethylene terephthalate (PET) or perfluoroalkoxy alkanes (PFA), and one or more (e.g., each) of second gasket member 620 and second insulator member 720 may include chlorinated polypropylene (CPP).

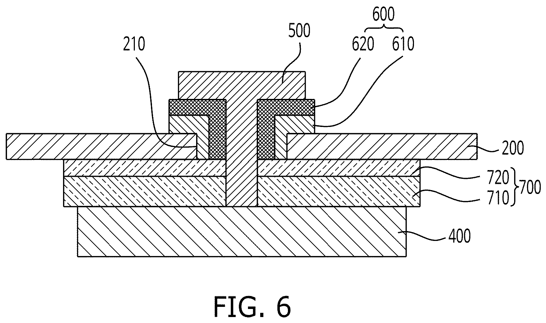

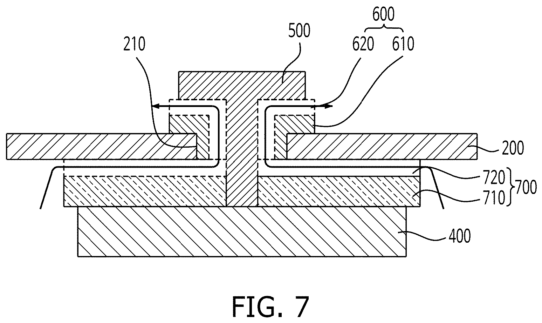

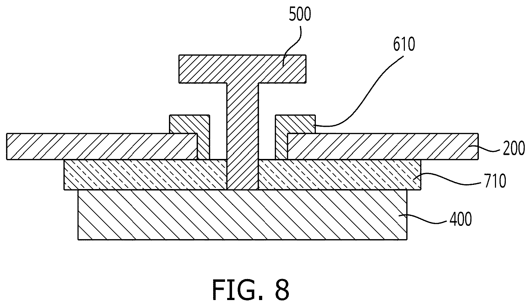

FIG. 6 is a cross-sectional view illustrating an example gasket 600 and an insulator 700 according to one embodiment of the present invention. FIG. 7 is a cross-sectional view of the gasket 600 and the insulator 700 shown in FIG. 6 as a portion of the gasket 600 and the insulator 700 are melted as gas is released to the outside of the case 200 according to an embodiment of the present invention. FIG. 8 is a cross-sectional view illustrating remaining unmelted portions of the gasket 600 and the insulator 700 shown in FIG. 7.

The description of the configuration according to the embodiment shown in FIGS. 3 to 5 is equally applicable to the embodiment shown in FIGS. 6 to 8.

At least a portion of one or more (e.g., each) of the gasket 600 and the insulator 700 may melt in a predetermined or set temperature range. In some embodiments, the gasket 600 may include a first gasket member 610 and a second gasket member 620, and the insulator 700 may include a first insulator member 710 and a second insulator member 720. In some embodiments, the second gasket member 620 and the second insulator member 720 may melt in a predetermined or set temperature range.

In the embodiment of FIG. 6, the first gasket member 610 may be press-fitted into the terminal hole 210, and the second gasket member 620 may be laminated on one surface of the first gasket member 610 and may be in contact with the electrode terminal 500. In some embodiments, the first insulator member 710 may be in contact with the terminal plate 400, and the second insulator member 720 may be laminated on one surface of the first insulator member 710 and may be in contact with an inner surface of the case 200. In this configuration, the second insulator member 720 may be connected to the second gasket member 620.

For example, during the thermal exposure safety heating test of the secondary battery 10 at 130°C-150°C, the second gasket member 620 and second insulator member 720 may melt, while the first gasket member 610 and first insulator member 710 remain without melting. Therefore, as the second gasket member 620 and second insulator member 720 melt, a flow path through which gas generated inside the case 200 is discharged may be formed along the space (dotted line in FIG. 7) where those members were located. For example, the gas inside case 200, generated during the thermal exposure safety heating test, may exit from the interior of case 200 to the exterior along the inner surface of case 200 and through terminal hole 210.

As shown in FIG. 8, in the state where second gasket member 620 and second insulator member 720 are melted, the first gasket member 610 and the first insulator member 710 remain without melting. Therefore, the first gasket member 610 may insulate between the case 200 and electrode terminal 500, and the first insulator member 710 may insulate between case 200 and terminal plate 400.

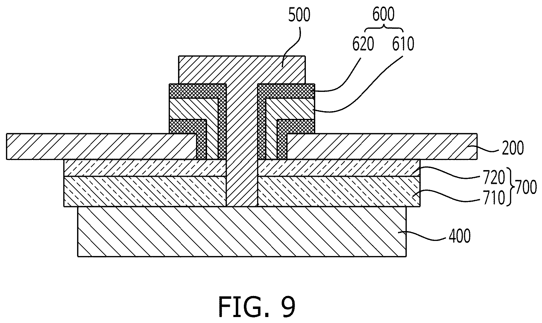

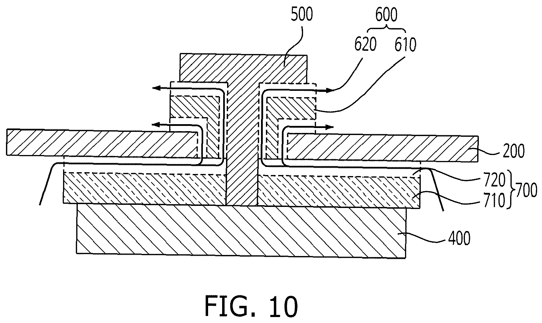

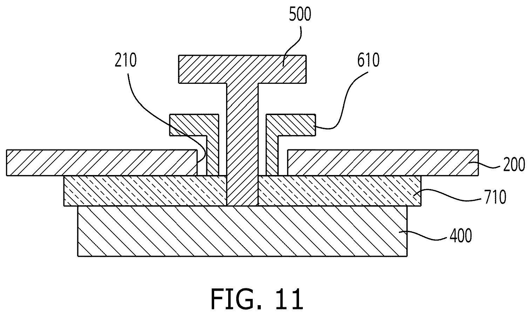

FIG. 9 is a cross-sectional view illustrating an example gasket 600 and an insulator 700 according to one embodiment of the present invention. FIG. 10 is a cross-sectional view of the gasket 600 and the insulator 700 shown in FIG. 9 as a portion of the gasket 600 and the insulator 700 are melted as gas is released to the outside of the case 200 according to an embodiment of the present invention. FIG. 11 is a cross-sectional view illustrating remaining unmelted portions of the gasket 600 and the insulator 700 shown in FIG. 10.

The description of the configuration according to the embodiment shown in FIGS. 3 to 5 is equally applicable to the embodiment shown in FIGS. 9 to 11.

At least a portion of one or more (e.g., each) of gasket 600 and insulator 700 may melt in a predetermined or set temperature range. In some embodiments, the gasket 600 may include the first gasket member 610 and the second gasket member 620, and the insulator 700 may include the first insulator member 710 and the second insulator member 720. In some embodiments, the second gasket member 620 and the second insulator member 720 may melt in a predetermined or set temperature range.

In one embodiment, as shown in FIG. 9, the first gasket member 610 may be formed to be spaced apart from the electrode terminal 500 in correspondence to the shape of the electrode terminal 500. The second gasket member 620 may surround the first gasket member 610 and may be in contact with both the electrode terminal 500 and the terminal hole 210. In some embodiments, the first insulator member 710 may be in contact with the terminal plate 400, and the second insulator member 720 may be laminated on one surface of the first insulator member 710 and may be in contact with an inner surface of the case 200. In this configuration, the second insulator member 720 may be connected to the second gasket member 620.

For example, during the thermal exposure safety heating test of the secondary battery 10 at 130°C-150°C, the second gasket member 620 and the second insulator member 720 may melt, while the first gasket member 610 and the first insulator member 710 remain without melting. Therefore, a flow path through which gas generated inside the case 200 is discharged may be formed along the space (dotted line in FIG. 10) where the second gasket member 620 and the second insulator member 720 were located. For example, the gas inside case 200, generated during the thermal exposure safety heating test, may exit from the interior of case 200 to the exterior along the inner surface of the case 200 and through the terminal hole 210.

As shown in FIG. 11, in the state where second gasket member 620 and second insulator member 720 are melted, the first gasket member 610 and the first insulator member 710 remain without melting. Therefore, the first gasket member 610 may insulate between the case 200 and the electrode terminal 500, and the first insulator member 710 may insulate between the case 200 and the terminal plate 400.

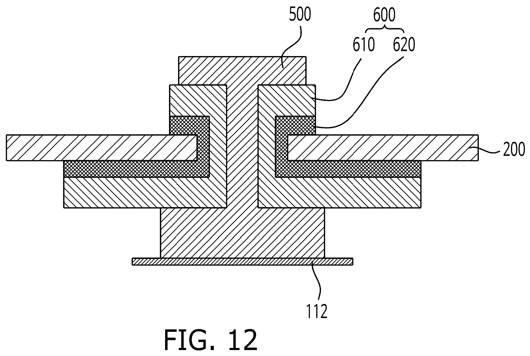

FIG. 12 is a cross-sectional view of an example gasket 600 of a secondary battery 10 according to one embodiment of the present invention.

In the embodiment of FIG. 12, the secondary battery 10 may include a cover 300 coupled to the case 200 that accommodates the electrode assembly 100, the electrode terminal 500, and the gasket 600, wherein at least a portion of the gasket 600 may melt in a predetermined or set temperature range. The gasket 600 may be disposed or arranged between the case 200 and the electrode terminal 500 and may be inserted into a terminal hole 210.

In some embodiments, the gasket 600 may include the first gasket member 610 in contact with the electrode terminal 500, and the second gasket member 620 laminated on one surface of the first gasket member 610 and press-fitted into the terminal hole 210.

The electrode terminal 500 may be expanded radially outward by caulking or spinning, and may allow the electrode terminal 500 to be stably coupled to the case 200.

The first gasket member 610 may have a higher melting point than the second gasket member 620. According to an embodiment, the melting point of the first gasket member 610 may be in a range from approximately 250°C to approximately350°C, and the melting point of second gasket member 620 may be in a range from approximately 115°C to approximately 145°C.

In some embodiments, the second gasket member 620 may melt in a predetermined or set temperature range to form a flow path connecting an interior of the case 200 to an exterior of the case 200. For example, during a thermal exposure safety heating test at 130°C-150°C, the second gasket member 620 may melt while first gasket member 610 remains unmelted. Thus, along the space where second gasket member 620 was disposed or arranged, a flow path may be formed through which gas generated inside the case 200 is discharged. For example, gas inside the case 200 generated during the thermal exposure safety heating test may exit to the outside of the case 200 along the inner surface of the case 200 and through the terminal hole 210.

While the second gasket member 620 is melted, the first gasket member 610 may remain without melting. Therefore, the first gasket member 610 may insulate between the case 200 and the electrode terminal 500.

In some embodiments, if the secondary battery 10 is placed in an abnormal operating condition such as an overcurrent condition, the temperature may rise, increasing the internal pressure, and may cause a portion of the gasket 600 to melt. This may cause gas inside case 200 to be released. In this case, the remaining unmelted portion of gasket 600 may remain between the case 200 and the electrode terminal 500 to provide insulation and to prevent a short circuit.

In some embodiments, during partial melting or thermal deformation of the gasket 600 in a high-temperature environment (e.g., a temperature environment above a threshold), heat may be absorbed in the course of the melting or deformation process, and heat inside the secondary battery 10 may be released to the outside. Therefore, the heat inside the secondary battery 10 may be reduced, preventing the entire gasket 600 from melting, or reducing the portion of the gasket 600 that is melted. In some embodiments, even if the interior of the secondary battery 10 reaches a high temperature (e.g., a temperature above a threshold), the partially melted or thermally deformed gasket 600 at a relatively lower temperature may prevent or reduce damage to the interior of the secondary battery 10 and a short circuit caused by complete melting of gasket 600. Thus, improved thermal safety and explosion prevention may be achieved.

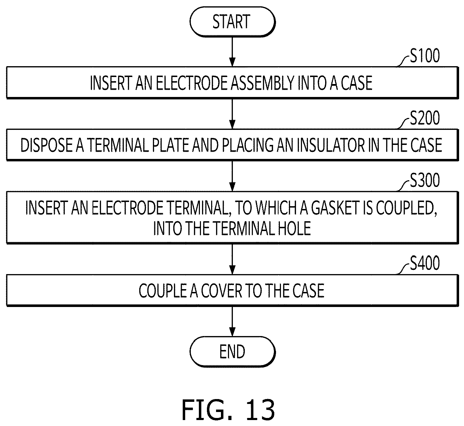

FIG. 13 is a flowchart illustrating an example method for manufacturing a secondary battery 10 according to an embodiment of the present invention.

Referring to FIG. 13, a method for manufacturing a secondary battery 10 according to an embodiment may include inserting an electrode assembly 100 into a case 200 (step S100); disposing a terminal plate 400 and placing an insulator 700 in the case 200 (step S200); inserting an electrode terminal 500, to which a gasket 600 is coupled, into the terminal hole 210 (step S300); and coupling a cover 300 to the case 200 (step S400). In some embodiments, at least a portion of the gasket 600 and the insulator 700 may melt in a predetermined or set temperature range.

In one embodiment, in step S100 (inserting an electrode assembly 100 into the case 200), an electrode assembly 100 comprising a first electrode 110, a separator 130, and a second electrode 120 may be inserted into a case 200 having an open first side and a terminal hole 210 formed on a second side different from the first side.

In step S200 (disposing a terminal plate 400 and an insulator 700 in the case 200), a terminal plate 400 connected to one of the first electrode 110 or the second electrode 120 may be disposed or arranged inside the case 200, and an insulator 700 may be disposed or arranged between the case 200 and the terminal plate 400.

In step S300 (inserting the electrode terminal 500 having the gasket 600 coupled thereto into the terminal hole 210), the electrode terminal 500 having the gasket 600 coupled thereto may be inserted into the terminal hole 210 from outside the case 200. The gasket 600 may include a first gasket member 610 in contact with the electrode terminal 500 and a second gasket member 620 laminated on one surface of the first gasket member 610 and press-fitted into the terminal hole 210. The insulator 700 may include a first insulator member 710 in contact with the terminal plate 400, and a second insulator member 720 laminated on one surface of the first insulator member 710, in contact with an inner surface of the case 200, and connected to the second gasket member 620.

After step S300 (inserting the electrode terminal 500 with the gasket 600 coupled thereto into the terminal hole 210), step S400 (coupling the cover 300 to the open first side of the case 200) may be performed. During a thermal exposure safety heating test of the completed secondary battery 10 manufactured by this method, at least a portion of one or more (e.g., each) of the gasket 600 and the insulator 700 may melt in a predetermined or set temperature range.

According to an embodiment, the melting points of one or more (e.g., each) of the first gasket member 610 and the first insulator member 710 may be 250°C-350°C, and the melting points of one or more (e.g., each) of the second gasket member 620 and the second insulator member 720 may be 115°C-145°C. Thus, one or more (e.g., each) of the second gasket member 620 and the second insulator member 720 may melt in a predetermined or set temperature range to form a flow path from the interior of the case 200 to the exterior of the case 200.

Although the present invention has been described with reference to embodiments and drawings illustrating aspects thereof, the present invention is not limited thereto. Various modifications and variations can be made by a person skilled in the art to which the present invention belongs within the scope of the technical spirit of the present invention and the claims and their equivalents, below.

### Reference signs

10: secondary battery
100: electrode assembly
110: first electrode
112: first electrode tab
120: second electrode
122: second electrode tab
130: separator
200: case
210: terminal hole
300: cover
400: terminal plate
500: electrode terminal
600: gasket
610: first gasket member
620: second gasket member
700: insulator
710: first insulator member
720: second insulator member

## Claims

1. A secondary battery (10) comprising:
an electrode assembly (100) including a first electrode (110), a separator (130), and a second electrode (120);
a case (200) having an open first side that accommodates the electrode assembly (100), and having a terminal hole (210) on a second side different from the first side;
a cover (300) coupled to the open first side of the case (200);
an electrode terminal (500), coupled inside the case (200) to one of the first electrode (110) or the second electrode (120) via a terminal plate (400), and exposed to an exterior of the case (200);
a gasket (600) arranged between the case (200) and the electrode terminal (500) on an exterior of the case (200) and inside the terminal hole (210); and
an insulator (700) between the case (200) and the terminal plate (400) on an interior of the case (200),
wherein at least a portion of one or more of the gasket (600) and the insulator (700) are configured to melt in a set temperature range.

2. The secondary battery (10) as claimed in claim 1, wherein
the gasket (600) comprises:
a first gasket member (610) in contact with the electrode terminal (500); and
a second gasket member (620) laminated on one surface of the first gasket member (610) and fitted into the terminal hole (210),
and wherein the insulator (700) comprises:
a first insulator member (710) in contact with the terminal plate (400); and
a second insulator member (720) laminated on one surface of the first insulator member (710), in contact with an inner surface of the case (200), and connected to the second gasket member (620).

3. The secondary battery (10) as claimed in claim 2, wherein one or more of the first gasket member (610) and the first insulator member (710) has a higher melting point than one or more of the second gasket member (620) and the second insulator member (720).

4. The secondary battery (10) as claimed in claim 2 or 3, wherein
a melting point of one or more of the first gasket member (610) and the first insulator member (710) is in a range from approximately 250°C to approximately 350°C, and
a melting point of each of the second gasket member (620) and the second insulator member (720) is in a range from approximately 115°C to approximately 145°C.

5. The secondary battery (10) as claimed in any one of claims 2 to 4, wherein one or more of the second gasket member (620) and the second insulator member (720) are configured to melt in the set temperature range to form a flow path connecting an interior of the case (200) to an exterior of the case (200).

6. The secondary battery (10) as claimed in any one of claims 2 to 5, wherein one or more of the first gasket member (610) and the first insulator member (710) comprises polyethylene terephthalate (PET) or perfluoroalkoxy alkanes (PFA).

7. The secondary battery (10) as claimed in any one of claims 2 to 6, wherein one or more of the second gasket member (620) and the second insulator member (720) comprises chlorinated polypropylene (CPP).

8. The secondary battery (10) as claimed in any one of claims 2 to 7, wherein
a thickness of the first gasket member (610) is in a range from approximately 50% to approximately 75% of a thickness of the gasket (600), and
a thickness of the first insulator member (710) is in a range from approximately 50% to approximately 75% of a thickness of the insulator (700).

9. The secondary battery (10) as claimed in claim 1, wherein
the gasket (600) comprises:
a first gasket member (610) fitted into the terminal hole (210); and
a second gasket member (620) laminated on one surface of the first gasket member (610) and in contact with the electrode terminal (500),
and wherein the insulator (700) comprises:
a first insulator member (710) in contact with the terminal plate (400); and
a second insulator member (720) laminated on one surface of the first insulator member (710), in contact with an inner surface of the case (200), and connected to the second gasket member (620).

10. The secondary battery (10) as claimed in claim 1, wherein
the gasket (600) comprises:
a first gasket member (610) formed to be spaced apart from the electrode terminal (500) by corresponding to a shape of the electrode terminal (500); and
a second gasket member (620) surrounding the first gasket member (610) and in contact with both the electrode terminal (500) and the terminal hole (210),
and wherein the insulator (700) comprises:
a first insulator member (710) in contact with the terminal plate (400); and
a second insulator member (720) laminated on one surface of the first insulator member (710), in contact with an inner surface of the case (200), and connected to the second gasket member (620).

11. The secondary battery (10) as claimed in any one of claims 1 to 10, wherein at least one of the gasket (600) or the insulator (700) comprise an insulating material and a thermoplastic resin.

12. A method for manufacturing a secondary battery (10), comprising:
inserting (S100) an electrode assembly (100) comprising a first electrode (110), a separator (130), and a second electrode (120), into a case (200) having an open first side and a terminal hole (210) formed on a second side different from the first side;
arranging (S200), inside the case (200), a terminal plate (400) that is connected to one of the first electrode (110) or the second electrode (120), and arranging an insulator (700) between the case (200) and the terminal plate (400);
inserting (S300), from an exterior of the case (200), an electrode terminal (500) having a gasket (600) coupled thereto into the terminal hole (210); and
coupling (S400) a cover (300) to the open first side of the case (200),
wherein at least a portion of one or more of the gasket (600) and the insulator (700) melts in a set temperature range.

13. The method of claim 12, wherein
the gasket (600) comprises:
a first gasket member (610) in contact with the electrode terminal (500); and
a second gasket member (620) laminated on one surface of the first gasket member (610) and fitted into the terminal hole (210),
and wherein the insulator (700) comprises:
a first insulator member (710) in contact with the terminal plate (400); and
a second insulator member (720) laminated on one surface of the first insulator member (710), in contact with an inner surface of the case (200) and connected to the second gasket member (620).

14. The method of claim 13, wherein
a melting point of one or more of the first gasket member (610) or the first insulator member (710) is in a range from approximately 250°C to approximately 350°C, and a melting point of one or more of the second gasket member (620) and the second insulator member (720) is in a range from approximately 115°C- to approximately 145°C.

15. The method of claim 13 or 14, wherein one or more of the second gasket member (620) and the second insulator member (720) melts in a set temperature range to form a flow path from an interior of the case (200) to an exterior of the case (200).
